# EUROPEAN PATENT APPLICATION

(11) **EP 2 280 547 A1**
(43) Date of publication of application: **02.02.2011**
(21) Application number: 08751766.0
(22) Date of filing: 19.05.2008
(51) Int. Cl.: H04N 7/18

(54) **VEHICLE SURROUNDINGS MONITORING DEVICE AND VEHICLE SURROUNDINGS MONITORING METHOD**

(71) Applicant: Panasonic Corporation, Kadoma-shi Osaka 571-8501 (JP)
(72) Inventor: OKAMOTO, Shusaku, Osaka 540-6207 (JP)
(74) Representative: Grünecker, Kinkeldey, Stockmair & Schwanhäusser Anwaltssozietät
(86) International application number: PCT/JP2008/001248
(87) International publication number: WO 2009/141846

(57) **Abstract**

A vehicle surroundings monitoring device can simultaneously display with high visibility a bird's-eye view image, an auxiliary image, and the direction of the auxiliary image. The vehicle surroundings monitoring device (100) has a display control section (140) for displaying on a single display screen both a bird's-eye view image that is an image of view from above the vehicle, viewing the surroundings of the vehicle, and an auxiliary image that is an image of the surroundings of the vehicle, viewed from the vehicle; a frame line overlay section (143) for causing a frame line surrounding an image region corresponding to the auxiliary image to be displayed overlaid on the bird's-eye view image; and first to fourth cameras (110-1 to 110-4) attached to the vehicle and imaging the surroundings of the vehicle. The display control section (140) composes a bird's-eye view image by using images captured by the first to fourth cameras (110-1 to 110-4).

## Description

### Technical Field

The present invention relates to a vehicle surrounding monitoring apparatus and a vehicle surrounding monitoring method that are utilized to help check security upon driving a vehicle. To be more specific, the present invention relates to a vehicle surrounding monitoring apparatus and a vehicle surrounding monitoring method that display images taken from the surroundings of a vehicle.

### Background Art

When driving a vehicle such as a car, a driver has difficulty checking whether or not there are obstacles in the back or side of a vehicle. Hence, in recent years, a vehicle surrounding monitoring apparatus that monitors the surroundings of a driver and helps driving for the driver by taking images of the rear and side (collectively referred to as "the back" where necessary) of a vehicle and displaying on a monitor the images taken is spreading. By using this vehicle surrounding monitoring apparatus, for example, when a vehicle that is stopped facing forward in a parking area is driven out of the parking area by driving it backward, the driver can readily check on a monitor the situation in the back and, consequently, drive more safely.

As an improved version of this vehicle surrounding monitoring apparatus, an apparatus is being proposed that tries to exhaustively assist various driving scenes using a plurality of cameras (see, for example, Patent Document 1). The vehicle surrounding monitoring apparatus disclosed in Patent Document 1 takes images of the surroundings of a vehicle using a plurality of cameras all oriented in different directions, synthesizes a plurality of images taken and generates an image (hereinafter "overhead image") that looks down on the surroundings of the vehicle from a virtual viewpoint above the vehicle. Then, the vehicle surrounding monitoring apparatus displays a compound image (hereinafter simply "compound image") combining the generated overhead image and an image showing the surroundings from the vehicle (hereinafter "auxiliary image").

An auxiliary image is, for example, an image in a rear direction taken when a vehicle is driving backward, or is an image in a horizontal direction taken when passengers get on or off the vehicle. Such a view is displayed, so that the driver can check the situation in a specific range in details in the auxiliary image while paying attention to a plurality of directions in the overhead image.

From the perspectives of improvement in usability, it is preferable to communicate to the driver an image of which direction is shown in the auxiliary image, i n a more recognizable manner, that is, with a high visibility. Hence, conventionally, there is a technique of displaying, in a compound image, information showing an image of which direction is shown by an auxiliary image.

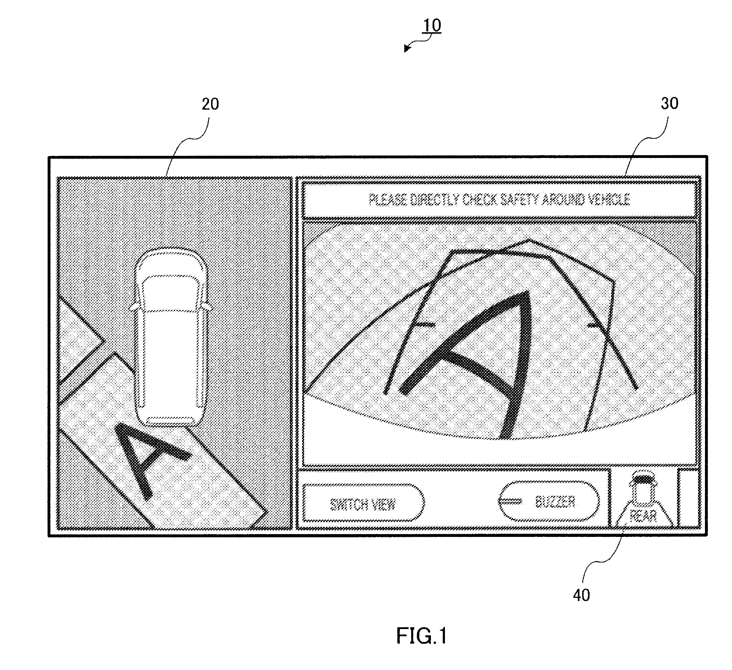

FIG. 1 shows a screen configuration of a compound image in a conventional vehicle surrounding monitoring apparatus. In addition to an overhead image 20 and an auxiliary image 30, a conventional view 10 shows an icon 40 indicating an image of which direction is shown in the auxiliary image, in an area apart from the overhead image 20 and the auxiliary image 30. This view 10 allows the driver to accurately recognize the direction of an image shown as the auxiliary image 30 (hereinafter simply "the direction of the auxiliary image") by looking at the icon 40.
Patent Document 1: International Publication No.00/64175 Pamphlet

### Disclosure of Invention

### Problems to be Solved by the Invention

However, the conventional compound image shown in FIG. 1 needs to display an icon on a limited screen without damaging the visibility of an overhead view and an auxiliary image, and therefore has a problem of having to make a n icon small. If the icon is small, the driver has difficulty recognizing the direction of an auxiliary image, and this may become an obstacle to check safety. Accordingly, all of an overhead image, an auxiliary image and the direction of the auxiliary image are preferably displayed with a high visibility.

It is therefore an object of the present invention to provide a vehicle surrounding monitoring apparatus and a vehicle surrounding monitoring method that can display an overhead image, an auxiliary image and the direction of the auxiliary image with a high visibility at the same time.

### Means for Solving the Problem

The vehicle surrounding monitoring apparatus according to the present invention employs a configuration which includes: a display controlling section that displays on one screen an overhead image which is an image showing surroundings of a vehicle from above the vehicle and an auxiliary image which is an image showing from the vehicle the surroundings of the vehicle; and a frame superimposing section that displays the overhead image by superimposing on the overhead image a frame enclosing an image area matching the auxiliary image.

The vehicle surrounding monitoring apparatus configured in this way can display the overhead image by superimposing on the overhead image the frame enclosing the image area matching the auxiliary image. By this means, it is possible to display the direction of an auxiliary image, without using an additional screen area and damaging the visibility of an overhead image. That is, it is possible to display an overhead image, an auxiliary image and the direction of the auxiliary image with a high visibility at the same time.

The vehicle surrounding monitoring apparatus according to the present invention employs a configuration which includes: a plurality of cameras that are attached to the vehicle and that take images of the surroundings of the vehicle, and in which the display controlling section synthesizes, for the overhead image, images taken by the plurality of cameras.

The vehicle surrounding monitoring apparatus configured in this way can synthesize for an overhead image the images taken by a plurality of cameras attached to a vehicle, and, consequently, can display the overhead image following movement of the vehicle.

The vehicle surrounding monitoring apparatus according to the present invention employs a configuration in which: a horizontal angle of view of the auxiliary image is narrower than a horizontal angle of view of the overhead image.

The vehicle surrounding monitoring apparatus configured in this way displays on one screen an overhead image that shows an image having a greater horizontal angle of view and an auxiliary image having a smaller horizontal angle of view than the above horizontal angle of view, and, consequently, allows the driver to check situations in both a wide range and a narrow range around the vehicle using the display image. That is, the vehicle surrounding monitoring apparatus can present an area that needs to be shown in greater $details such as an area to which attention must be paid in particular in a driving situation, together with the wide range area.

The vehicle surrounding monitoring apparatus according to the present invention employs a configuration in which: the display controlling section switches between and displays a plurality of auxiliary images matching different image areas of the overhead image.

The vehicle surrounding monitoring apparatus configured in this way can switch between and display a plurality of auxiliary images matching different image areas of an overhead image. By this means, the vehicle surrounding monitoring apparatus can display a plurality of types of auxiliary images and display individual auxiliary images in comparatively large sizes, and narrow down and display necessary auxiliary images.

The vehicle surrounding monitoring apparatus according to the present invention employs a configuration which includes: a data storing section that stores a plurality of sets of mapping tables and display area data matching the plurality of auxiliary images, the sets each including: a mapping table for synthesizing the images taken by the plurality of cameras, for a compound image which is an image for displaying the overhead image and the auxiliary image on one screen; and display area data for superimposing the frame on the compound image synthesized based on the mapping table; and a display switching section that switches between and selects a plurality of sets of the mapping tables and the display data stored in the data storing section, and in which: the display controlling section performs synthesis for the compound image using a mapping table in a set selected by the display switching section; and the frame superimposing section superimposes an image of the frame on the compound image using display area data in the set selected by the display switching section.

The vehicle surrounding monitoring apparatus configured in this way can display a compound image on which a frame is superimposed, by switching between sets of a mapping table and display area data, and, consequently, can readily switch between and display a plurality of types of compound images on which a frame is superimposed.

The vehicle surrounding monitoring apparatus according to the present invention employs a configuration in which: the auxiliary image includes at least one of an image of a front of the vehicle, an image of a back of the vehicle and an image of a side of the vehicle.

The vehicle surrounding monitoring apparatus configured in this way can display as an auxiliary image an image in the front of a vehicle, an image in the back or an image in the side and, consequently, can display as one auxiliary image the range that allows easy safety check upon driving the vehicle.

The vehicle surrounding monitoring apparatus according to the present invention employs a configuration in which: the display controlling section switches between and displays the plurality of auxiliary images according to an operation state of the vehicle.

The vehicle surrounding monitoring apparatus configured in this way can switch auxiliary images according to the operation state of the vehicle. By this means, the vehicle surrounding monitoring apparatus can automatically select and display an image in a range in which the driver must check safety in particular, by displaying the front of the vehicle when the vehicle moves forward, displaying the back of the vehicle when the vehicle moves backward or displaying the side of the vehicle when the vehicle is stopped.

The vehicle surrounding monitoring method according to the present invention includes: determining an operation state of a vehicle; selecting one of a plurality of auxiliary images, which are images showing from the vehicle different directions of surroundings of the vehicle, according to the operation state of the vehicle; and displaying the selected auxiliary image and an overhead image, which is an image showing the surroundings of the vehicle from above the vehicle, on one screen at the same time, and displaying the overhead image by superimposing on the overhead image a frame enclosing an image area matching the auxiliary image.

This vehicle surrounding monitoring method can switch auxiliary images according to the operation state of the vehicle, and display an overhead image by superimposing on the overhead image a frame enclosing an image area matching an auxiliary image. By this means, it is possible to display an overhead image, an auxiliary image of a type matching the operation state of the vehicle and the direction of the auxiliary image, without using an additional screen area and damaging the visibility of the overhead image.

### Advantageous Effects of Invention

The present invention can display an overhead image by superimposing on the overhead image a frame enclosing an image area matching an auxiliary image, and show the direction of the auxiliary image by emphasizing the image area. By this means, it is possible to display the direction of the auxiliary image without using the additional screen area and damaging the visibility of the overhead image. That is, it is possible to display an overhead image, an auxiliary image and the direction of the auxiliary image with a high visibility at the same time.

### Brief Description of Drawings

FIG.1 is a plan view showing a compound image in a conventional vehicle surrounding monitoring apparatus;
FIG.2 is a configuration diagram of a vehicle surrounding monitoring apparatus according to an embodiment of the present invention;
FIG.3 is a perspective view showing an example of positions in which cameras and a monitor are attached, according to the present embodiment;
FIG.4 is a plan view showing an example of a compound image according to the present embodiment;
FIG.5 is a plan view showing an example of each image according to the present embodiment when a gear of a vehicle is set to reverse;
FIG.6 is a flowchart showing an example of an operation of a vehicle surrounding monitoring apparatus according to the present embodiment;
FIG.7 is a flowchart showing an example of frame processing according to the present embodiment;
FIG.8 shows an evaluation target in an experiment of comparing a vehicle surrounding monitoring apparatus according to the present embodiment and another vehicle surrounding monitoring apparatus;
FIG.9 shows test subject data in a comparison experiment according to the present embodiment; and
FIG.10 is a circle graph showing the result of a comparison experiment according to the present embodiment.

### Best Mode for Carrying Out the Invention

Hereinafter, an embodiment of the present invention will be explained in detail with reference to the accompanying drawings.

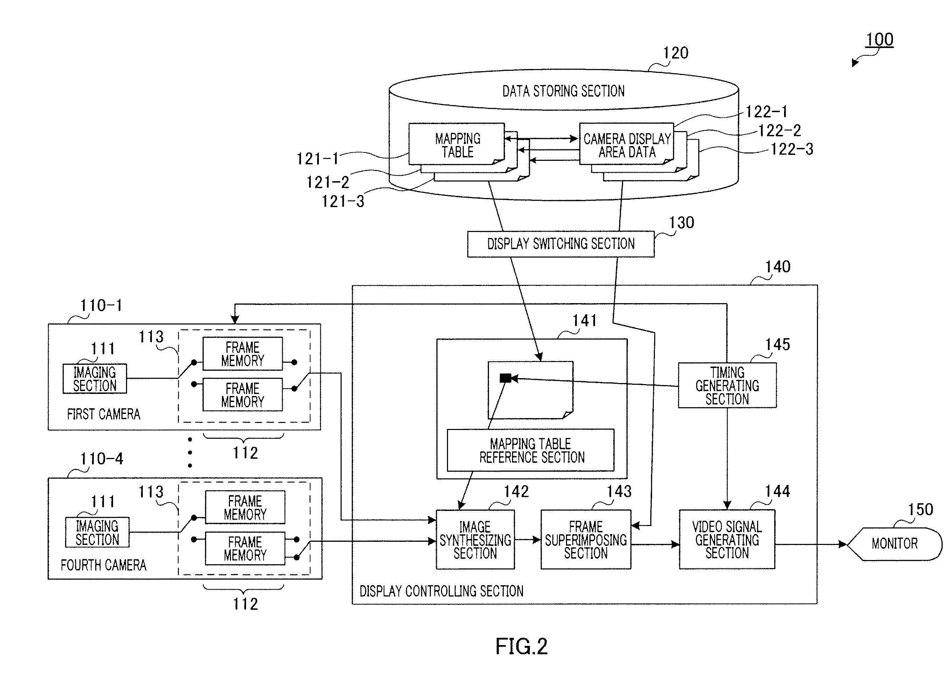

FIG.2 is a system configuration diagram of a vehicle surrounding monitoring apparatus according to an embodiment of the present invention. The vehicle surrounding monitoring apparatus according to the present embodiment will be explained as an example where the present invention is applied to an apparatus that displays a compound image in which an overhead image which is an image showing the surroundings of a vehicle from above the vehicle, and an auxiliary image which is an image showing from the vehicle the surroundings of the vehicle are arranged in one screen.

In FIG.2, a vehicle surrounding monitoring apparatus 100 is roughly formed with first to fourth cameras 110-1 to 110-4, a data storing section 120, a display switching section 130, a display controlling section 140 and a monitor 150.

The first to fourth cameras 110-1 to 110-4 employ the same configuration, and will be explained collectively as a camera 110. The camera 110 is formed with an imaging section 111, frame memories 112 and a frame switching section 113. Here, the imaging section 111 has an imaging element such as a CCD (Charge Coupled Device) or a CMOS (Complementary Metal Oxide) and an optical system that forms an optical image on the imaging surface of the imaging element (they are not shown), and is configured to output the image taken by the imaging element to the frame memory 112. The frame memory 112 is a memory that temporarily stores images taken in the imaging section 111. The frame switching section 113 is configured to switch the input destination of an image taken in the imaging section 111 to each frame memory 112, and switch between the frame memories 112 which are the reference destination of an image to output to the display controlling section 140. Note that, in case where a CMOS is adopted as an imaging element, the imaging element may have the function of the frame memories 112.

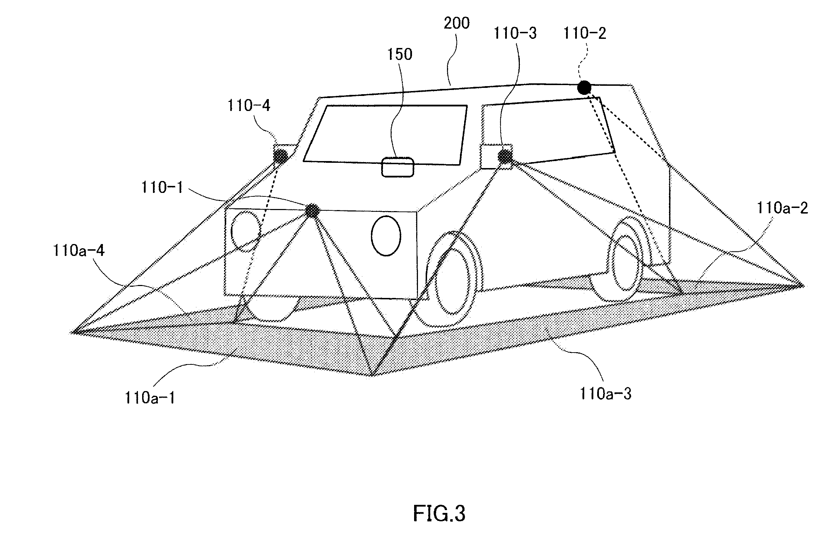

FIG.3 is a perspective view showing an example of positions in which the first to fourth cameras 110-1 to 110-4 and the monitor 150 of the vehicle surrounding monitoring apparatus in FIG.1 are attached.

As shown in FIG.3, the first camera 110-1 is attached in the center of the front of a vehicle 200 to take the image of the front of the vehicle 200 including the bumper in the front part of the vehicle 200. The second camera 110-2 is attached in the center of the rear part of the vehicle 200 to take an image of the back of the vehicle 200 including the bumper in the rear part of the vehicle 200. The third camera 110-3 is attached to a left side mirror of the vehicle 200 to take an image of the left side of the vehicle 200. The fourth camera 110-4 is attached to the right side mirror of the vehicle 200 to take an image of the right side of the vehicle 200. Further, the monitor 150 is attached in the position of a dashboard of the vehicle 200 that can be seen by the driver.

Imaging ranges 110a-1 to 110a-4 of the first to fourth cameras 110-1 to 110-4 each include the ground around the vehicle 200. Further, adjacent imaging ranges 110a of the imaging ranges 110a-1 to 110a-4 of the first to fourth cameras 110-1 to 110-4 contact or overlap at least in the ground. By this means, the first to fourth cameras 110-1 to 110-4 all can take images of the ground around the vehicle 200, from 360 degrees. Further, by displaying images taken by the first to fourth cameras 110-1 to 110-4, it is possible to show to the driver whether or not there is an obstacle on the ground.

An overhead image and an auxiliary image are synthesized based on images taken by the first to fourth cameras 110-1 to 110-4 (described later). Accordingly, following the movement of the vehicle 200, the vehicle surrounding monitoring apparatus 100 can present to the driver an overhead image and an auxiliary image that display the situation around the vehicle in virtually real-time processing.

The data storing section 120 of FIG.2 is configured to store in advance first to third mapping tables 121-1 to 121-3 and first to third camera display area data 122-1 to 122-3 matching these first to third mapping tables 121-1 to 121-3.

The mapping tables 121 are a set of items of mapping data per pixel of a compound image. The mapping data indicates which pixel of an image stored in the frame memory 112 matches each pixel of a compound image. That is, the mapping tables 121 are tables for synthesizing for a compound image the images taken by the first to fourth cameras 110-1 to 110-4. The camera display area data 122 indicates an image area in a compound image matching an auxiliary image generated based on the mapping tables 121. Assume that, with the present embodiment, the camera display area data 122 is image data that shows an overhead image by superimposing on the overhead image a frame enclosing an image area in the overhead image matching an auxiliary image.

The display switching section 130 is configured to switch between and select the first to third mapping tables 121-1 to 121-3 stored in the data storing section 120, according to the driving situation of the vehicle 200, and select the camera display area data 122 matching the selected mapping table 121.

The display controlling section 140 is configured to generate a compound image from the image stored in each frame memory 112 of the first to fourth cameras 110-1 to 110-4, using the mapping table 121 and the camera display area data 122 selected by the display switching section 130. The display controlling section 140 is formed with a mapping table reference section 141, an image synthesizing section 142, a frame superimposing section 143, a video signal generating section 144 and a timing generating section 145.

The mapping table reference section 141 is configured to temporarily store the mapping table 121 selected by the display switching section 130, refer to this mapping table 121 and output mapping data of each pixel of the compound image to the image synthesizing section 142.

The image synthesizing section 142 is configured to read images stored in the frame memories 112 of the first to fourth cameras 110-1 to 110-4, according to mapping data outputted from the mapping table reference section 141, and map the images that are read. That is, the image data outputted from the image synthesizing section 142 is image data of a compound image based on the mapping table 121 selected by the display switching section 130.

The frame superimposing section 143 is configured to synthesize the image data outputted from the image synthesizing section 142 and the camera display area data 122 selected by the display switching section 130, and generate an image in which the image of the frame enclosing the image area matching the auxiliary image is superimposed on a compound image (hereinafter "frame superimposed image").

The video signal generating section 144 is configured to generate a video signal for displaying a movie sequence from the frame superimposed image of each frame generated in the frame superimposing section 143.

The timing generating section 145 is configured to generate a timing signal for controlling the timing when the frame switching sections 113 of the first to fourth cameras 110-1 to 110-4 switch the connection state, the timing when the mapping table reference section 141 outputs mapping data and the operation timing of the video signal generating section 144.

The monitor 150 is formed with an arbitrary display, and is configured to display a frame superimposed image based on the video signal generated in the display controlling section 140.

Note that, although not shown, the vehicle surrounding monitoring apparatus 100 has a CPU (Central Processing Unit), a storing medium such as a ROM (Read Only Memory) that stores a control program and an operation memory such as a RAM (Random Access Memory). For example, the above function of each section is realized by executing a control program by the CPU.

Next, the contents of the first to third mapping tables 121-1 to 121-3 and the first to third camera display area data 122-1 to 122-3 will be explained.

The first to third mapping tables 121-1 to 121-3 are mapping tables for synthesizing for a compound image the images taken by the first to fourth cameras 110-1 to 110-4. In the compound image according to present embodiment, an overhead image from a virtual viewpoint fixed above the vehicle 200 and an auxiliary image are arranged side by side. By adopting this display mode, it is possible to allow the driver to check situations in both a wide range and a narrow range around the vehicle 200 using a display image. Further, the overhead image displays an image of the surroundings of the vehicle 200 from 360 degrees, so that it is possible to allow the driver to check the situation in all directions using a display image.

The first mapping table 121-1 is a mapping table for displaying an image of the front of the vehicle 200 as an auxiliary image. Further, the second mapping table 121-2 is a mapping table for displaying an image of the back of the vehicle 200 as an auxiliary image. Further, the third mapping table 121-3 is a mapping table for displaying as an auxiliary image the side images arranging the image in the left direction of the vehicle 200 and an image in the right direction.

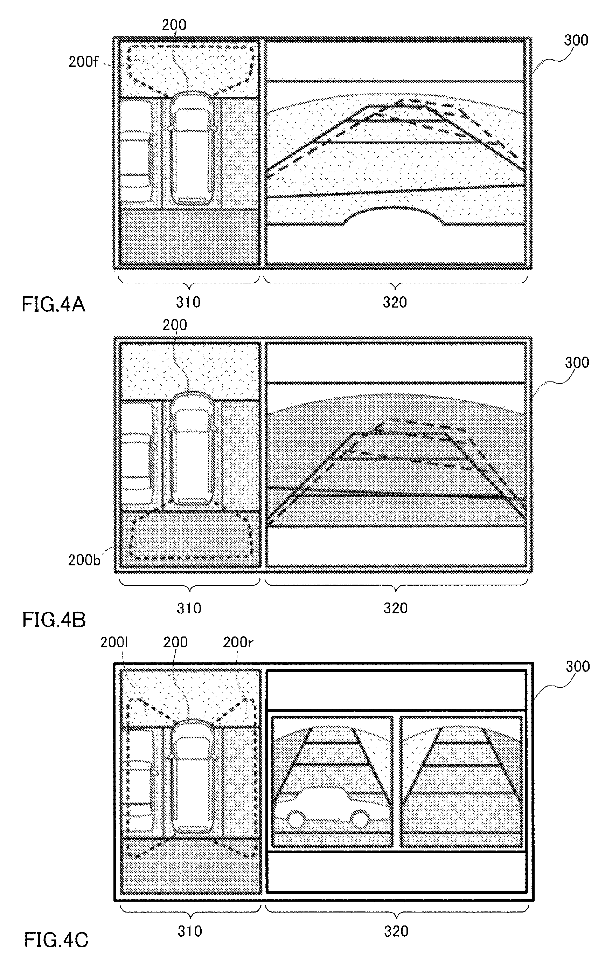

FIG.4A to FIG.4C are plan views showing examples of compound images generated from the first to third mapping tables 121-1 to 121-3.

As shown in FIG.4A, in case where the first mapping table 121-1 is used, an overhead image 310 and an auxiliary image 320 showing an image of the front of the vehicle 200 are displayed as a compound image 300. The image of the auxiliary image 320 matches an image area 200f in the overhead image 310 in the front of the vehicle 200. The image area 200f matches, for example, the imaging range 110a-1 of the first camera 110-1.

As shown in FIG.4B, in case where the second mapping table 121-2 is used, the overhead image 310 and the auxiliary image 320 showing an image of the back of the vehicle 200 are displayed as the compound image 300. The image of the auxiliary image 320 matches an image area 200b in the overhead image 310 in the back of the vehicle 200. The image area 200b matches, for example, the imaging range 110a-2 of the second camera 110-2.

As shown in FIG.4C, in case where the third mapping table 121-3 is used, the overhead image 310 and the auxiliary image 320 showing an image of the left side of the vehicle 200 and an image of the right side of the vehicle 200 are displayed as the compound image 300. The image of the auxiliary image 320 matches an image area 2001 and an image area 200r in the overhead image 310 in the left side and the right side of the vehicle 200. The image area 2001 matches, for example, an imaging range 110a-3 of the third camera 110-1. The image area 200r matches, for example, the imaging area 110a-4 of the fourth camera 110-4.

The display switching section 130 selects the first mapping table 121-1 while the vehicle 200 is running with a gear set to other than reverse, and selects the second mapping table 121-2 while the vehicle 200 is running with a gear set to reverse. By this means, an image of the traveling direction of the vehicle 200 upon driving is shown in the auxiliary image 320, so that the driver can drive more safely. Further, the display switching section 130 selects the third mapping table 121-3 while the vehicle 200 is not running or the side door is left open. Thus, an image of the surroundings of the side door of the vehicle 200 is displayed in the auxiliary image 320 when the driver gets on and off the vehicle 200, so that the driver can get on and off the vehicle 200 safely. That is, it is possible to automatically select and display an image in the range in which the driver must check safety in particular. Further, unnecessary auxiliary images 320 are not displayed, so that individual auxiliary images 320 can be displayed in comparatively large sizes.

Further, camera display area data and an example of a frame superimposed image when the gear of the vehicle is set to reverse will be explained.

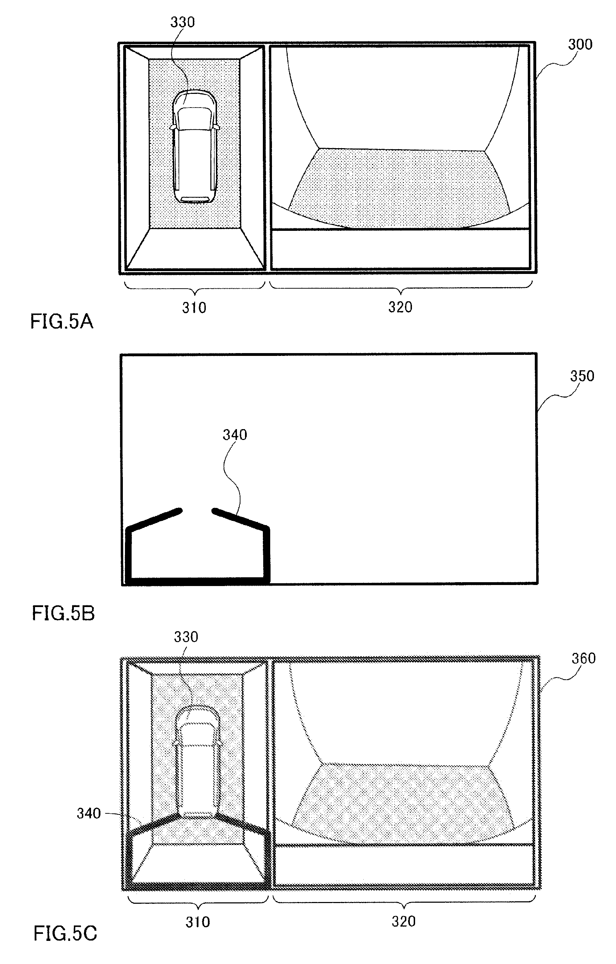

FIG.5A to FIG.5C are plan views showing an example of a compound image, an example of an image of a frame based on camera display area data and an example of a frame superimposed image generated from these images, respectively, when the gear of the vehicle 200 is set to reverse.

As shown in FIG.5A, in the center of the overhead image 310 of the compound image 300, an image 330 showing the vehicle 200 from above is arranged. When the gear of the vehicle 200 is set to reverse, the second mapping table 121-2 is selected as described above, and therefore, as shown in FIG.5A, image data of the compound image 300 becomes data that shows an image of the back of the vehicle 200 as the auxiliary image 320. As described above, this image matches the image area of the back of the vehicle 200 in the overhead image 310. Accordingly, as shown in FIG.5B, the second camera display area data 122-2 becomes image data 350 that shows a frame 340 enclosing the image area of the back of the vehicle 200 in the overhead image 310.

The frame superimposing section 143 superimposes the camera display area data 122-2 shown in FIG.5B on the image data of the compound image 300 shown in FIG.5A to generate a frame superimposed image 360 shown in FIG.5C. The frame superimposed image 360 shows the state in which the image area of the back of the vehicle 200 in the overhead image 310 matching the auxiliary image 320 is surrounded by the frame 340. Further, the image area matching the auxiliary image 320 is made the area closed by the image 330 of the vehicle 200 and the frame 340.

Similarly, the first camera display area data 122-1 becomes image data that shows a frame enclosing the image area in the front of the vehicle 200 in the overhead image generated based on the first mapping table 121-1. Further, the third camera display area data 122-3 becomes image data that shows two frames enclosing image areas in the overhead image generated based on the third mapping table 121-3 in the left and right side of the vehicle 200. By switching between sets of the mapping table 121 and the display area data 122, it is possible to readily switch between and display a plurality of types of compound images 300 on which a frame is superimposed.

The first to third camera display area data 122-1 to 122-3 can be generated by various methods.

For example, the first to third camera display area data 122-1 to 122-3 are generated by setting the position of the frame 340 manually by the operator while visually checking three compound images generated based on the first to third mapping tables 121-1 to 121-3.

Further, for example, the first to third camera display area data 122-1 to 122-3 are generated by calculating a range of a predetermined plane (for example, the ground) shown by an auxiliary image, from each mapping table 121, and automatically setting a frame based on the calculated range.

Furthermore, for example, in case where the image range of an auxiliary image matches the imaging range of each camera 110, the first to third camera display area data 122-1 to 122-3 are generated by automatically setting a frame based on the area of the mapping destination in which images taken by the camera 110 and matching the auxiliary image are mapped.

The style such as the position, color, line type, size and thickness of the frame may be any style as long as the driver can readily recognize the direction of an auxiliary image and the image of an overhead image. Further, the color, thickness and flashing state of the frame may be changed depending on various conditions such as areas or obstacles. Furthermore, the range surrounded by the frame do not need to completely match the range that is shown by the auxiliary image and that can be displayed by the overhead image, and may be the range that allows accurate recognition of the direction of the auxiliary image.

Next, the operation of the vehicle surrounding monitoring apparatus 100 configured in this way will be explained.

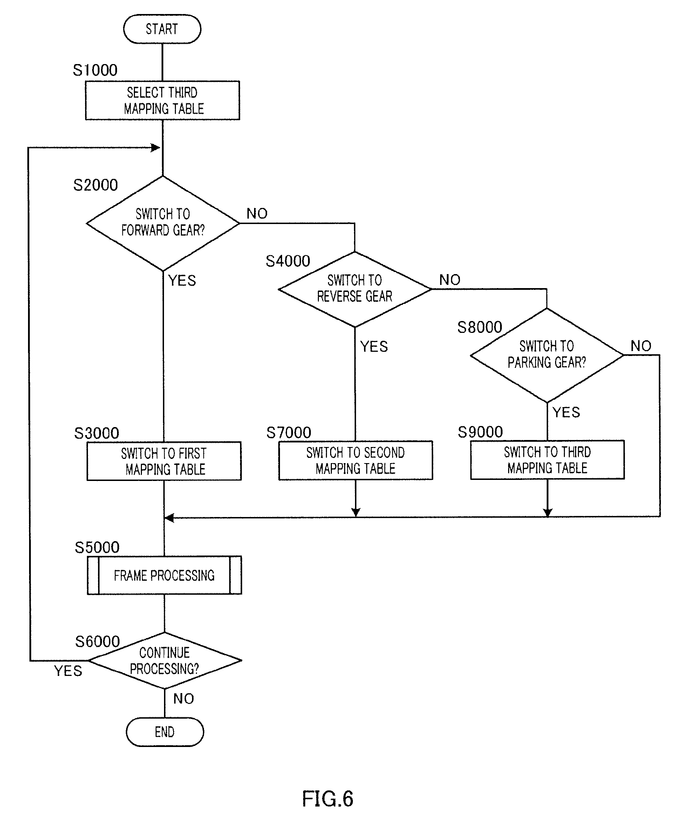

FIG.6 is a flowchart showing an example of an operation of the vehicle surrounding monitoring apparatus 100. Here, assume that the operation of the vehicle surrounding monitoring apparatus 100 is started in a state where the vehicle 200 is set to the parking gear.

First, in step S1000, the display switching section 130 selects and sets the third mapping table 121-3 to the mapping table reference section 141 as the default state. Further, at this time, the display switching section 130 selects and sets the third camera display area data 122-3 to the frame superimposing section 143.

Then, in step S2000, the display switching section 130 decides whether or not the gear of the vehicle 200 is switched to the forward gear. The display switching section 130 proceeds to step S3000 in case where the gear is switched to the forward gear (S2000:YES), or proceeds to step S4000 in case where the gear is not switched to the forward gear (S2000:NO).

In step S3000, the display switching section 130 selects and sets the first mapping table 121-1 to the mapping table reference section 141. Further, at this time, the display switching section 130 selects and sets the first camera display area data 122-1 to the frame superimposing section 143.

Then, in step S5000, the vehicle surrounding monitoring apparatus 100 executes frame processing by cameras 110, mapping table reference section 141, image synthesizing section 142, frame superimposing section 143 and video signal generating section 144. The frame processing will be described later.

Then, in step S6000, the vehicle surrounding monitoring apparatus 100 decides whether or not to continue the processing, and returns to step S2000 in case where the processing is continued (S6000:YES) or finishes a series of processings in case where the processing is not continued (S6000:NO).

Further, in step S4000, the display switching section 130 decides whether or not the gear of the vehicle 200 is switched to the reverse gear. The display switching section 130 proceeds to step S7000 in case where the gear is switched to the reverse gear (S4000:YES), or proceeds to step S8000 in case where the gear is not switched to the reverse gear (S4000:NO).

In step S7000, the display switching section 130 selects and sets the second mapping table 121-2 to the mapping table reference section 141, and proceeds to the frame processing in step S5000. Further, at this time, the display switching section 130 selects and sets the second camera display area data 122-2 to the frame superimposing section 143.

Further, in step S8000, the display switching section 130 decides whether or not the gear of the vehicle 200 is switched to the parking gear. The display switching section 130 proceeds to step S9000 in case where the gear is switched to the parking gear (S8000:YES), or proceeds to the frame processing in step S5000 in case where the gear is not switched to the parking gear (S8000:NO).

Note that, while the gear is not switched, the frame processing in step S5000 is repeated.

According to this operation, every time the gear of the vehicle 200 is switched between the parking gear, forward gear and reverse gear, the mapping table 121 and the camera display area data 122 to be used are switched, and, as a result, the direction of an auxiliary image and the position of the frame of an overhead image are switched. Then, the frame processing which generates a video signal by superimposing a frame on a compound image in frame units and which will be explained below is repeated.

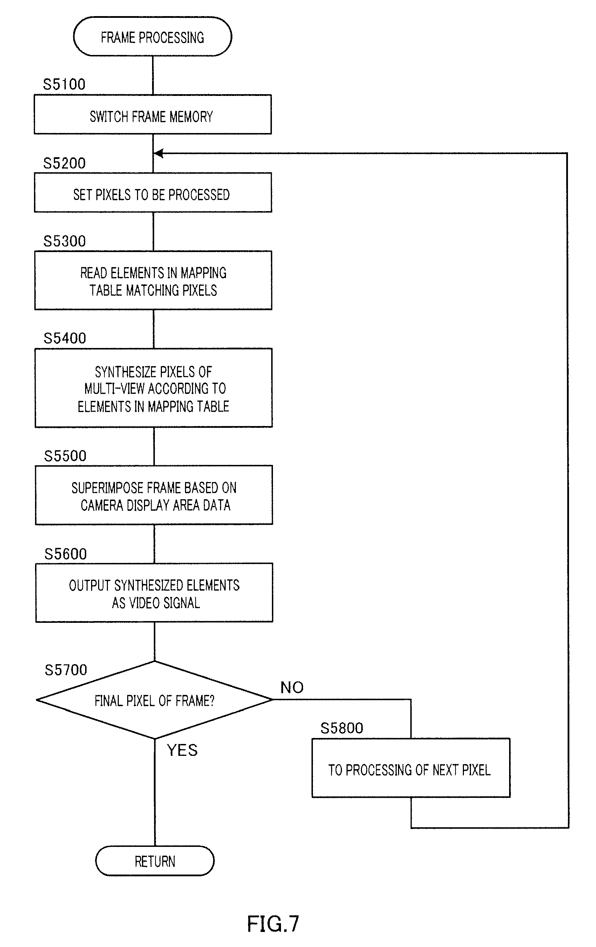

FIG.7 is a flowchart showing an example of frame processing.

First, in step S5100, the first to fourth cameras 110-1 to 110-4 each switch the frame memory 112 in which a camera image is written and the frame memory 112 to which the image synthesizing section 142 refers.

To be more specific, the frame switching section 113 of each camera 110 switches the connection state of each frame memory 112 and the imaging section 111 and the connection state of each frame memory 112 and the display controlling section 140 such that the frame memory 112 in which an image from the imaging section 111 is inputted completely becomes the destination of the image to which the display controlling section 140 refers. The timing to switch these connection states is controlled according to the timing signal outputted from the display controlling section 140. The positions of pixels of camera images referred to by the image synthesizing section 142 become discrete irrespective of the order of writing by the imaging section 111. Consequently, the frame switching section 113 switches a plurality of frame memories 112 in each camera 110 in this way, so that it is possible to prevent writing and reference from interfering each other.

Then, in step S5200, the timing generating section 145 sets pixels to which the mapping table reference section 141 must currently output mapping data, according to the synthesis and output timing. The timing generating section 145 sequentially selects and sets the pixels of a frame of a compound image one by one in step S5200.

Then, in step S5300, the mapping table reference section 141 reads elements matching the pixels set in step S5200, from the mapping table in which the elements are currently stored, and outputs the elements to the image synthesizing section 142 as mapping data.

Then, in step S5400, the image synthesizing section 142 synthesizes values of applicable pixels of the camera images recorded in the frame memories 112 of each camera 110 according to the input mapping data, to generate and output image data of a compound image to the frame superimposing section 143. For example, the simplest method of determining values of pixels is to adopt values of applicable pixel data of the frame memories 112 as the values of pixels.

Then, in step S5500, the frame superimposing section 143 generates image data of a frame superimposed image in which the frame indicating the direction of an auxiliary image is superimposed on a compound image, from image data of the input compound image and the camera display area data 122, and outputs the image data to the video signal generating section 144.

In case where the camera display area data 122 is image data of an image in which the portion of the frame is colored and the other portions are made transparent, the frame superimposing section 143 generates image data of a frame superimposed image by image processing of superimposing the image on the compound image. Further, in case where the camera display area data 122 is data indicating pixels in the portion of the frame, the frame superimposing section 143 generates image data of a frame superimposed image by transforming pixel values of applicable portions in a compound image.

As described above, the camera display area data 122 matching the mapping table 121 that is used by the image synthesizing section 142 is set at all times in the frame superimposing section 143. Consequently, the frame superimposing section 143 superimposes the frame enclosing an image area matching an auxiliary image, on an overhead image, at all times.

Then, in step S5600, the video signal generating section 144 transforms image data of the input frame superimposed image into a video signal, and outputs the video signal to the monitor 150.

Then, in step S5700, the timing generating section 145 decides whether or not processing with respect to the final pixel of a frame is finished. The timing generating section 145 proceeds to step S5800 in case where the processing with respect to the final pixel is not finished yet (S5700:NO).

In step S5800, the timing generating section 145 transitions to processing of the next pixel, and returns to step S5200.

Then, as a result of repeating processings in step S5200 to S5700, the vehicle surrounding monitoring apparatus 100 returns to the processing in FIG.6 when the processing with respect to the final pixel of a frame of a synthesized image is finished (S5700:YES). Then, the vehicle surrounding monitoring apparatus 100 adequately starts frame processing with respect to the next frame.

According to this frame processing, the vehicle surrounding monitoring apparatus 100 displays on the monitor 150 a frame superimposed image on which the frame enclosing the image area matching an auxiliary image is superimposed on an overhead image.

Note that, although a case has been explained where synthesis processing is performed in frame units, it is possible to display a frame superimposed image by the same processing even in case where synthesis processing is performed in field units.

According to the above-explained operation, the vehicle surrounding monitoring apparatus 100 can show an auxiliary image according to the operation state of the vehicle 200 and indicate the direction of the auxiliary image by the frame superimposed on an overhead image. By this means, it is possible to display an overhead image, an auxiliary image of a type matching the operation state of the vehicle 200 and the direction of the auxiliary image with a high visibility at the same time.

As described above, with the vehicle surrounding monitoring apparatus 100, the direction of an auxiliary image is indicated by emphasizing an image area in an overhead image matching an auxiliary image, and this image area is shown by superimposing on the overhead image a frame enclosing the image area. The frame superimposed on the overhead image clearly indicates one or more areas around the vehicle 200 that are closed with respect to the vehicle 200. That is, the vehicle surrounding monitoring apparatus 100 adopts compound image display mode of enclosing an image area by the frame, so that it is possible to indicate the direction of an auxiliary image by visual information of a corresponding image area of a comparatively large size. Further, the frame is used, and therefore this has little influence on the visibility of the image of this area.

Hereinafter, an experiment result of comparing the visibility between compound image display mode according to the present embodiment and other compound image display modes including conventional display mode will be explained.

The experiment of comparing the visibility was conducted by showing to a plurality of test subjects a compound image according to the present embodiment, a compound image adopting another display mode and a compound image adopting conventional display mode, giving a point to the display mode of an image area matching an auxiliary image that is evaluated by each test subject to be the most recognizable area, and comparing count results of points.

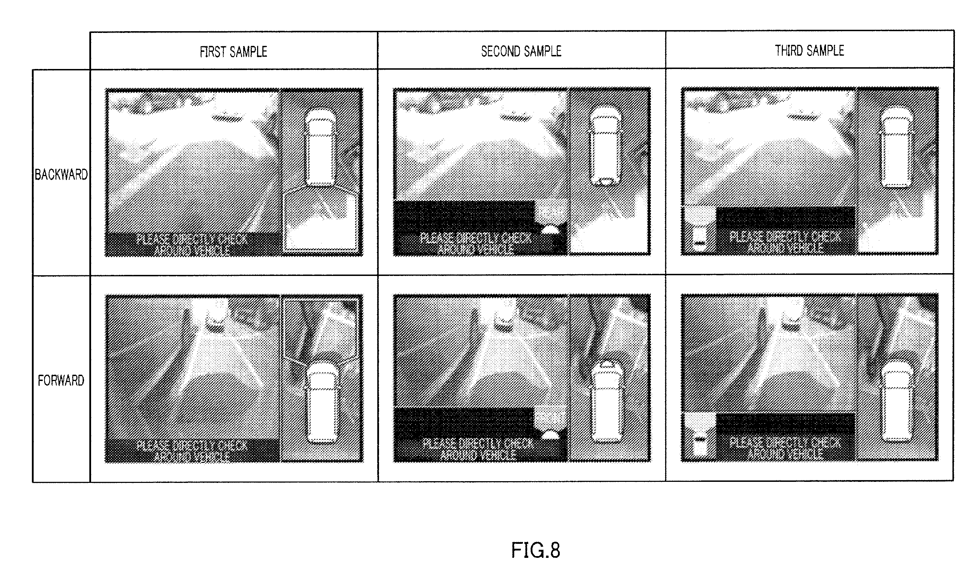

FIG.8 shows evaluation targets in the above comparison result.

As shown in FIG.8, with this experiment, the first sample was a compound image according to the present embodiment, that is, display mode of superimposing a frame on an overhead image. Further, the second sample was mode of displaying an icon indicating the direction of an auxiliary image by using text information, in an area apart from an overhead image and the auxiliary image. Furthermore, the third sample was conventional display mode, that is, mode of displaying an icon indicating the direction of an auxiliary image by a figure, in an area apart from an overhead image and the auxiliary image. Still further, for each sample, a still image of a compound image of a backward scene and a forward scene of a vehicle was prepared.

With the first sample, although an image showing the direction of an auxiliary image was superimposed on an overhead image and was arranged, mode of enclosing an area by the frame was adopted and therefore the visibility of an overhead image did not decrease much. Further, with the second sample and the third sample, the icon indicating the direction of an auxiliary image was displayed in a substantially small size in order to minimize the decrease in the visibility due to reduction in the display range of an overhead image and an auxiliary image. Accordingly, in all of the first to third samples, the visibility of the overhead image and the auxiliary image was at virtually the same level.

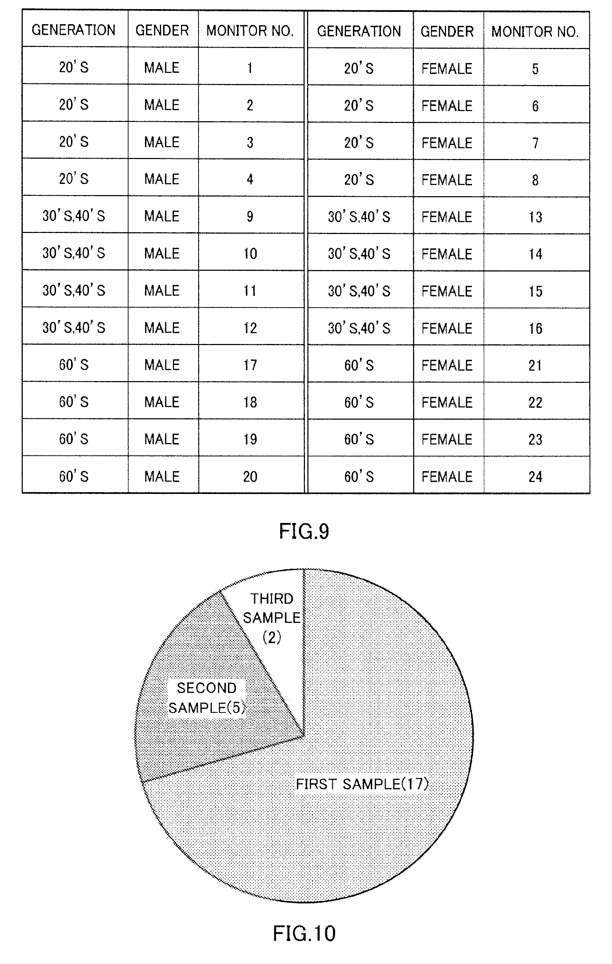

FIG.9 shows data of test subjects in the above comparison experiment.

As shown in FIG.9, the test subjects are twenty four men and women in their twenties to sixties. The frequency each test subject drives a car is once or more in a month, that is, the frequency is a little. With this experiment, each subject is shown the images of three samples shown in FIG.8 and then ranks the three samples based on their subjective views from the viewpoints of whether or not they mistake the direction of an auxiliary image.

FIG.10 is a circle graph showing that how many test subjects evaluated which sample of a compound image was the most recognizable image, as the result of the above comparison experiment.

As shown in FIG.10, the number of test subjects who evaluated t hat the compound image of the first sample (according to the present embodiment) was the most recognizable image was the highest and seventeen, five for the second sample and two for the third sample. The display sizes of overhead images and auxiliary images of the second sample and the third sample must be made smaller than the first sample due to the display area for the icon. Therefore, the visibility of the overhead images and auxiliary images of the second sample and the third sample is lower than the visibility of the overhead image and auxiliary image of the first sample. Accordingly, this experiment result shows the comparison result of the visibility in the direction of an auxiliary image. It is obvious from this experiment result that the compound image according to the present embodiment shows an overhead image, an auxiliary image and the direction of the auxiliary image at the same time with a higher visibility than the compound images according to the second sample and the third sample, and, particularly, shows superiority over the compound image of a conventional vehicle surrounding monitoring apparatus.

As explained above, according to the present embodiment, it is possible to display an overhead image by superimposing on the overhead image the frame enclosing an image area matching an auxiliary image, and, consequently, display the direction of the auxiliary image without using the additional screen area and damaging the visibility of the overhead image. That is, it is possible to display an overhead image, an auxiliary image and the direction of the auxiliary image with a high visibility at the same time.

Further, the direction of an auxiliary image is indicated by a frame enclosing a corresponding image area, and, consequently, can be shown more visually distinctively while minimizing the decrease in the visibility of the overhead image.

Further, both of the overhead image and auxiliary image include images of the ground around the vehicle, so that the driver can visually check the obstacle on the ground and associate the overhead image and auxiliary image based on the images of the ground.

Note that, although a case has been explained with the present embodiment where mapping tables and camera display area data are separately prepared, the mapping tables may include camera display area data. In this case, for example, the mapping table adopts pixel values of pixels in a compound image which must be made portions of the frame, as pixel values of the color of the frame. By this means, an image in which the frame is superimposed on an overhead image can be displayed only by mapping processing without providing the frame superimposing section 143.

Further, although a case has been explained with the present embodiment where mapping tables for the overall compound image are provided, it is equally possible to, for example, prepare an overhead image and an auxiliary image separately, and use the mapping table for the overhead image and the mapping table for the auxiliary image in combination. Further, in case where images taken by cameras are used as an auxiliary image as is, a mapping table for the portion of the auxiliary image is not required.

Further, although a case has been explained with the present embodiment, where, as a method of displaying an overhead image by superimposing the frame on the overhead image, camera display area data is prepared separately from the mapping tables, other methods may be used. For example, by including color information of the frame, instead of information of camera pixels, in pixels in mapping data matching the portion of the frame, a method of embedding information of the frame in the mapping table is possible.

Further, although a case has been explained with the present embodiment where the direction of an auxiliary image is switched between three patterns of the front, the back and the left and right sides, the direction of an auxiliary image may be switched between more directions. In this case, a mapping table and camera display area data matching each direction only need to be prepared.

Further, the direction of an auxiliary image may be set at random, or the direction of an auxiliary image may be changed smoothly. In this case, it is only necessary to calculate the range of the ground shown by the auxiliary image, in real-time processing and further calculate the position of the frame in the overhead image, in real-time processing based on the calculated range of the ground.

Further, although a case has been explained where the virtual viewpoint of an overhead image is fixed, the position, orientation and angle of view of this virtual viewpoint may be made variable. In this case, it is only necessary to calculate an image area in the overhead image matching the range of the ground shown by the auxiliary image, in real-time processing based on the state of the virtual viewpoint, and further plot the frame enclosing the calculated image area in the compound image, in real-time processing.

Further, although a case has been explained with the present embodiment where images of the surroundings of the vehicle are taken by four cameras, less than four or five or more cameras may be used.

### Industrial Applicability

The vehicle surrounding monitoring apparatus and the vehicle surrounding monitoring method according to the present invention are useful as a vehicle surrounding monitoring apparatus and a vehicle surrounding monitoring method that can display an overhead image, an auxiliary image and the direction of the auxiliary image with a high visibility at the same time.

## Claims

1. A vehicle surrounding monitoring apparatus comprising:
a display controlling section that displays on one screen an overhead image which is an image showing surroundings of a vehicle from above the vehicle and an auxiliary image which is an image showing from the vehicle the surroundings of the vehicle; and
a frame superimposing section that displays the overhead image by superimposing on the overhead image a frame enclosing an image area matching the auxiliary image.

2. The vehicle surrounding monitoring apparatus according to claim 1, further comprising a plurality of cameras that are attached to the vehicle and that take images of the surroundings of the vehicle,
wherein the display controlling section synthesizes, for the overhead image, images taken by the plurality of cameras.

3. The vehicle surrounding monitoring apparatus according to claim 1, wherein a horizontal angle of view of the auxiliary image is narrower than a horizontal angle of view of the overhead image.

4. The vehicle surrounding monitoring apparatus according to claim 2, wherein the display controlling section switches between and displays a plurality of auxiliary images matching different image areas of the overhead image.

5. The vehicle surrounding monitoring apparatus according to claim 4, further comprising:
a data storing section that stores a plurality of sets of mapping tables and display area data matching the plurality of auxiliary images, the sets each comprising: a mapping table for synthesizing the images taken by the plurality of cameras, for a compound image which is an image for displaying the overhead image and the auxiliary image on one screen; and display area data for superimposing the frame on the compound image synthesized based on the mapping table; and
a display switching section that switches between and selects a plurality of sets of the mapping tables and the display data stored in the data storing section, wherein:
the display controlling section performs synthesis for the compound image using a mapping table in a set selected by the display switching section; and
the frame superimposing section superimposes an image of the frame on the compound image using display area data in the set selected by the display switching section.

6. The vehicle surrounding monitoring apparatus according to claim 1, wherein the auxiliary image comprises at least one of an image of a front of the vehicle, an image of a back of the vehicle and an image of a side of the vehicle.

7. The vehicle surrounding monitoring apparatus according to claim 4, wherein the display controlling section switches between and displays the plurality of auxiliary images according to an operation state of the vehicle.

8. A vehicle surrounding monitoring method comprising:
determining an operation state of a vehicle;
selecting one of a plurality of auxiliary images, which are images showing from the vehicle different directions of surroundings of the vehicle, according to the operation state of the vehicle; and
displaying the selected auxiliary image and an overhead image, which is an image showing the surroundings of the vehicle from above the vehicle, on one screen at the same time, and displaying the overhead image by superimposing on the overhead image a frame enclosing an image area matching the auxiliary image.

## Amended claims

### Amended claims under Art. 19.1 PCT

1. A vehicle surrounding monitoring apparatus comprising:
a display controlling section that displays on one screen an overhead image which is an image showing surroundings of a vehicle from above the vehicle and an auxiliary image which is an image showing from the vehicle the surroundings of the vehicle; and
a frame superimposing section that displays the overhead image by superimposing on the overhead image a frame defining an outer rim of a range shown by the auxiliary image.

2. The vehicle surrounding monitoring apparatus according to claim 1, further comprising a plurality of cameras that are attached to the vehicle and that take images of the surroundings of the vehicle,
wherein the display controlling section synthesizes, for the overhead image, images taken by the plurality of cameras.

3. The vehicle surrounding monitoring apparatus according to claim 1, wherein a horizontal angle of view of the auxiliary image is narrower than a horizontal angle of view of the overhead image.

4. The vehicle surrounding monitoring apparatus according to claim 2, wherein the display controlling section switches between and displays a plurality of auxiliary images matching different image areas of the overhead image.

5. The vehicle surrounding monitoring apparatus according to claim 4, further comprising:
a data storing section that stores a plurality of sets of mapping tables and display area data matching the plurality of auxiliary images, the sets each comprising: a mapping table for synthesizing the images taken by the plurality of cameras, for a compound image which is an image for displaying the overhead image and the auxiliary image on one screen; and display area data for superimposing the frame on the compound image synthesized based on the mapping table; and
a display switching section that switches between and selects a plurality of sets of the mapping tables and the display data stored in the data storing section, wherein:
the display controlling section performs synthesis for the compound image using a mapping table in a set selected by the display switching section; and
the frame superimposing section superimposes an image of the frame on the compound image using display area data in the set selected by the display switching section.

6. The vehicle surrounding monitoring apparatus according to claim 1, wherein the auxiliary image comprises at least one of an image of a front of the vehicle, an image of a back of the vehicle and an image of a side of the vehicle.

7. The vehicle surrounding monitoring apparatus according to claim 4, wherein the display controlling section switches between and displays the plurality of auxiliary images according to an operation state of the vehicle.

8. A vehicle surrounding monitoring method comprising:
determining an operation state of a vehicle;
selecting one of a plurality of auxiliary images, which are images showing from the vehicle different directions of surroundings of the vehicle, according to the operation state of the vehicle; and
displaying the selected auxiliary image and an overhead image, which is an image showing the surroundings of the vehicle from above the vehicle, on one screen at the same time, and displaying the overhead image by superimposing on the overhead image a frame defining an outer rim of a range shown in the auxiliary image.
